# EUROPEAN PATENT SPECIFICATION

(11) **EP 3 732 602 B1**
(45) Date of publication and mention of the grant of the patent: **06.09.2023**
(21) Application number: 18830881.1
(22) Date of filing: 28.12.2018
(51) Int. Cl.: G06F 21/44, A24F 40/53, A24F 40/65

(54) **ELECTRICALLY OPERATED AEROSOL GENERATION SYSTEM WITH AUTHENTICATION OF CONSUMABLE**
ELEKTRISCH BETRIEBENES AEROSOLERZEUGUNGSSYSTEM MIT AUTHENTIFIZIERUNG DES VERBRAUCHSMATERIALS
SYSTÈME DE GÉNÉRATION D'AÉROSOL ACTIONNÉ ÉLECTRIQUEMENT AVEC AUTHENTIFICATION DE CONSOMMABLE

(30) Priority: 29.12.2017 EP 17211060
(43) Date of publication of application: 04.11.2020
(73) Proprietor: JT International SA, 1202 Geneva (CH)
(72) Inventor: ESTRIPEAU, Frédéric, 01220 Divonne-les-Bains (FR)
(74) Representative: Karl, Christof
(86) International application number: PCT/EP2018/097106
(87) International publication number: WO 2019/129866

(56) References cited:
- US-A1- 2014 201 094
- US-A1- 2016 309 788
- US-A1- 2017 020 191

## Description

### TECHNICAL FIELD

The present disclosure relates to the field of electrically operated aerosol generation systems that form an aerosol from an aerosol-forming precursor and deliver said aerosol to a user. In particular, the disclosure relates to authentication of a consumable comprising said precursor with a device body of said system.

### BACKGROUND

Aerosol generation systems comprise a consumable with a storage portion for storing an aerosol-forming precursor. The precursor may comprise a liquid. A heating system may be formed of one or more electrically activated heating elements, which are arranged to heat said precursor to generate the aerosol. The consumable may include the heating system. The aerosol is released into a flow path extending between an inlet and outlet of the system. The outlet may be arranged as a mouthpiece, which a user inhales through for delivery of the aerosol to the user. The consumable may include the mouthpiece. The consumable may dock with a device body, which includes, inter alia, control circuitry and a power supply to implement generation of the aerosol from the consumable.

A supplier (including a product vendor or manufacturer) of such an aerosol generation system may wish to control the usage of particular consumables therewith. Reasons for said control include, inter alia, product safety, reputation, and tracking of supply and usage of the consumable.

As a first example, the supplier may wish to ensure that the precursor comprises constituents that are safe for a user to inhale or that the precursor meets a particular quality standard so a high reputation for the product is maintained/developed.

US 2017/0020191 A1 discloses a control body and cartridge that are coupleable with one another to form an aerosol delivery device. The control body comprises a control component and an RFID reader contained within at least one housing. The cartridge comprises at least one heating element and an RFID tag contained within at least one housing. The RFID reader of the control body is coupled to the control component of the control body and configured to communicate with the RFID tag of the cartridge upon coupling of the control body with the cartridge. The control component of the control body is configured to authorize the cartridge for use with the control body based at least in part on communication between the RFID reader and the RFID tag.

As a second example, the supplier may wish to ensure that the physical construction of the consumable is acceptable for use, e.g. the mouthpiece if integrated therewith has a geometric configuration for ergonomic usage or acceptable delivery of the aerosol.

As a third example, the supplier may wish to ensure correct interoperability of the consumable with the device body. E.g. for a consumable integrating the heating system, it is desirable to ensure the heating system is compatible with the control circuitry of the device body, as use of incompatible consumables may for example be dangerous and/or effect the ability of the supplier of providing warranty for the device body.

As a fourth example, for systems wherein the amount of precursor processed is monitored, it may be desirable to have consumables with known amounts of precursor so that the total amount of precursor processed over a given time period can be determined. Related to this example, it may also be desirable to monitor the usage of particular consumable types so that when a stock of a user is exhausted, or nearly exhausted, the user can be notified, or automatic dispatch of new consumables is implemented.

It is desirable to implement control of the usage of the consumable with the device body in a cost-effective manner, particularly without increasing significantly the unit cost of the consumable. This is because during the lifecycle of the device body, a consumer will purchase and expend many consumables.

In spite of the effort already invested in the development of aerosol generation systems further improvements are desirable.

### SUMMARY

The current invention provides an aerosol generation system comprising: a consumable for an aerosol generation device and an aerosol generation device body. The consumable comprises an aerosol generating precursor and an information carrying medium storing information. The information may include an encrypted first portion and a corresponding second portion without encryption. "Corresponding" may refer to the same information but without a cryptographic rule applied. The device body includes electrical circuitry to: obtain from said information carrying medium said information; decrypt the first portion; determine the consumable as authentic if the decrypted first portion corresponds to the second portion, wherein all or part of the encrypted first portion and/or of the corresponding second portion without encryption of the information is associated with the operation of the consumable as part of the system, and is for authentication and for calibration of the device body for use with the consumable .

An aerosol generation system with a consumable including an information carrying medium storing information that includes a duplicate encrypted portion and a portion without encryption, and with the device body implementing an authentication process by decrypting the encrypted portion and comparing it to the portion without encryption, may permit cost-effective authentication, in particular, when compared to an arrangement where the consumable includes memory and a processor to provide a response to a challenge issued by circuitry of the device body. The system of the present disclosure obviates a processor and memory to store a cryptographic algorithm (e.g. a secret key) and therefore permits a lower unit cost for the consumable. Moreover, a lower capacity memory may be implemented with the present disclosure, since in embodiments, the encrypted information of the consumable may be 50-170 or 50-100 bits, whereas the mentioned cryptographic algorithm may be 256 bits or more, excluding additional memory for its execution. Moreover, the system of the present disclosure may be more secure since the cryptographic algorithm is not stored on the consumable, and it is therefore harder to obtain a decipher. Moreover, the authentication process may consume less of the device body's limited power resources since an additional processor of the consumable does not require operating. The latter is particularly relevant since experimental testing has shown surprisingly a user may play with the aerosol generation system by removing and re-attaching a consumable prior to its depletion for sport or entertainment, thus triggering multiple authentication sequences throughout the usage of the consumable.

As used herein "encryption", "enciphering" and "encoding" may refer to conversion of a plain-text message to a secure message, while "decryption", "deciphering" and "decoding" may refer to the inverse of this process.

According to the current invention, the information, which may include all or part of the first/second portion, may be associated with the operation of the consumable with the system. By including the information associated with the operation of the consumable with the system (e.g. one or more of: the device body; peripheral device; other remote computing device), the information may be transferred from the consumable to the device body for combinational authentication and for calibration of the device body for use with the consumable. Moreover, since the decrypted information is compared, the comparison process additionally acts as an integrity check for the information associated with the operation of the consumable with the system.

In embodiments, all or part of the information associated with the operation of the consumable which is encoded on the consumable may be encrypted as the first portion. It will be understood that there need only be sufficient bytes encrypted to enable a comparison, e.g. 10-30 bytes. The memory usage of the first portion may therefore be minimised thus reducing the memory capacity and potential cost of the memory of the consumable. In embodiments, all or part of the decrypted first portion are compared to the second portion.

In embodiments, the electrical circuitry is configured to enable operation of a heating system of an atomizer with the precursor of an authenticated consumable. An authenticated consumable may be determined if all or part of the decrypted first portion is identical to the second portion (e.g. corresponding addresses match each other). Enabling may include the circuitry of the device body to determine a trigger and apply electrical energy to a heating system. The trigger may include one or more of: a flow sensor of a flow path providing a signal processable to determine a threshold flow from a user inhale; actuation of a vaping button. With such an implementation, the precursor of only authenticated consumables can be processed to an aerosol. In embodiments, the operation is at least partially based on the information, e.g. the decrypted first portion and/or the second portion.

The information associated with the operation of the consumable may be processed to calibrate the device body for use with the consumable, e.g. by the circuitry controlling the heating system to maintain the heating system optimal target temperature, or a resistance based temperature calculation of the heating system may be based on an encoded series resistance of the one or more of the heater elements. The information associated with the operation of the consumable may be processed to determine usage of the particular consumable, e.g. for monitoring stock at a user location and when stock is determined as low, triggering a notification or a reordering process.

In embodiments, for a consumable that is determined as not authenticated, the electrical circuitry is configured to prevent operation of a heating system (e.g. no electrical energy is supplied to the heating system) of an atomizer with the precursor of the consumable or to enable usage of said heating system with said precursor at a predetermined operating temperature, which may be stored on the circuitry (e.g. a data storage thereof) of the device body. The safe operating temperature may be a temperature less (e.g. a low temperature) than an optimal temperature encoded by a consumable (e.g. the consumable which is not authenticated or a consumable designed to be authenticated with the system). An optimal temperature encoded by the consumable may be 180-320 degrees C. A low temperature (e.g. less than 130 degrees C) can be set for consumables that are not authenticated to reduce the risk of overheating the heating system. This is because an electrically resistive heating element would be of unknown performance since it is not specified by the supplier.

In embodiments, the circuitry is configured to provide via a user interface a notification that the consumable is not authenticated. By providing a notification, a user can determine conveniently whether the consumable will operate correctly as part of the system. The user interface may be arranged on one or more of: the device body; the consumable; an electronic peripheral device. The notification may be one or more or: audible; haptic; visual.

In embodiments, the consumable and the device body comprise a docking interface for docking of the consumable with the device body. The electrical circuitry may determine docking at the docking interface and trigger authentication of the consumable. By triggering the authentication process upon determination of docking, each time the consumable is removed, an authentication process is triggered. Thus, an authenticated consumable cannot be quickly removed and a counterfeit consumable reattached. The authentication process may be initiated with a database query to retrieve the information from the information carrying medium of the consumable.

In embodiments, the electrical circuitry implements a detection circuit to determine docking. The detection circuit may be arranged to be interrupted to determine docking or removal of a consumable. In embodiments, the detection circuit extends through a docked consumable, wherein docking is determined by a closed circuit. The detection circuit may supply electrical energy from a power supply of the device body to the information carrying medium of the consumable. With such an implementation as part of detection, electrical energy is conveniently supplied to the information carrying medium when arranged as electronic data storage ready for performing the authentication process. In other embodiments, the docking is determined by a mechanically actuated switch arranged on the device body, said switch actuated to close or open the detection circuit upon docking or removal of the consumable.

In embodiments, the consumable includes a heating system (e.g. one or more electrically resistive heating elements), the information of the information carrying medium of the consumable including information (e.g. the first and/or second portion or another portion) based on the an electrical property of the heating system (e.g. an encoded resistance in Ohms, capacitance or inductance), wherein the electrical circuitry is configured to authenticate a consumable by: measuring the electrical property of the heating system by the application of electrical energy therethrough; comparing the measured electrical property to the information based on the electrical property. A consumable may be authenticated if the measured electrical property corresponds to the information based on the electrical property.

In embodiments, the electrical circuitry of the device body includes one or more processors and/or an electronic data storage to implement any of the steps described herein.

In embodiments, the data storage of the device body includes a cryptographic algorithm to decrypt the first portion. As used herein, "cryptographic algorithm" may refer to an algorithm to implement the aforementioned encryption and/or decryption process/rule. Example implementations include symmetric cryptographic algorithms, including block cyphers. Specific example implementations include the Advanced Encryption Standard (AES) and Secure Hash Algorithm (SHA) and variants thereof. The cryptographic algorithm may be referred to as a secret key, e.g. when implementing AES.

In embodiments, the electrical circuitry implements electronic data storage. The data storage is configured to store a plurality of cryptographic algorithms. The information of the information carrying medium of the consumable comprises an identifier to identify one of said cryptographic algorithms for decryption of the first portion. The electrical circuitry is configured to identify a cryptographic algorithm for decryption of the first portion based on the identifier and to decrypt the first portion with the identified cryptographic algorithm. The identifier may be encoded with the first and/or second portion (e.g. as a hardware version) or another portion of the information carrying medium. By implementing a means to identify the particular cryptographic algorithm for decryption the system can be implemented in a secure manner. E.g., multiple cryptographic algorithms can be implemented on the device body, such that the correct one is selected based on the identifier (e.g. via a lookup table or other database implementation). The cryptographic algorithm may be the same algorithm used to encrypt the first portion or another cryptographic algorithm related thereto.

In embodiments, the aerosol generation device includes a communication interface to receive a cryptographic algorithm or information to generate a cryptographic algorithm. The data storage of the circuitry of the device body is configured to store said received algorithm. The circuitry may thereby update the stored cryptographic algorithms, e.g. by periodic software update. The device body can therefore change the stored cryptographic algorithms to enhance security, e.g. in the event one or more of the current algorithms become known. The identifier can be changed to correspond to the cryptographic algorithm.

In embodiments, the electrical circuitry implements electronic data storage. The data storage is configured to store a plurality of cryptographic algorithms. The consumable includes a heating system having one or more electrically resistive heating elements. The electrical circuitry is configured to: measure an electrical property (e.g. the electrical resistance, inductance or capacitance) of the heating system by the application of electrical energy therethrough (e.g. by applying a known electrical current through the heating system and measuring the electrical potential over the heating system). The circuitry is configured to select a cryptographic algorithm to decrypt the first portion based on the measured electrical property. The circuity is configured to decrypt the first portion as discussed in the preceding embodiments with the selected cryptographic algorithm.

The present disclosure provides an aerosol generation system comprising: a consumable for an aerosol generation device and an aerosol generation device body. The consumable comprises an aerosol generating precursor, a heating system having one or more electrically resistive heating elements and an information carrying medium storing information. The information may be based on an electrical property of the heating system (e.g. the electrical resistance, inductance or capacitance). The device body includes electrical circuitry. The electrical circuitry is configured to: measure the electrical property of the heating system by the application of electrical energy therethrough; determine the consumable as authentic if the measured electrical property corresponds to the information based on the electrical property. "Correspond" may refer to an exact correspondence in values or a correspondence within an acceptable threshold to account for measurement variation.

The present disclosure provides a consumable for use with an aerosol generation system, e.g. the device body as described herein. The consumable comprises a storage portion for storage of an aerosol generating precursor. The consumable comprises an information carrying medium storing information. The information of the information carrying medium comprises an encrypted first portion and a corresponding second portion without encryption. The consumable is authenticable by determining a correspondence of least part of the decrypted first portion to the second portion. The consumable may be implemented in accordance to any preceding embodiment or another embodiment disclosed herein. The present disclosure includes use of the consumable for the aerosol generation system (e.g. with the device body) as disclosed in any preceding embodiment or another embodiment disclosed herein.

The present disclosure provides an aerosol generation device body including electrical circuitry to: obtain from said information carrying medium said information; decrypt the first portion; determine the consumable as authentic if the decrypted first portion corresponds to the second portion. The device body may be implemented in accordance to any preceding embodiment or another embodiment disclosed herein.

The present disclosure provides a method of authenticating a consumable comprising an aerosol generating precursor, the method comprising: reading information comprising an encrypted first portion and a corresponding second portion without encryption (e.g. reading by control of a code reader or a database query); determining the consumable as authentic if the decrypted first portion corresponds to the second portion. The method may be implemented in accordance to any preceding embodiment or another embodiment disclosed herein. The present disclosure includes a computer program or electrical circuitry to perform said method and a computer readable medium comprising the computer program.

The preceding summary is provided for purposes of summarizing some embodiments to provide a basic understanding of aspects of the subject matter described herein. Moreover, the above and/or proceeding embodiments may be combined in any suitable combination to provide further embodiments. Other features, aspects, and advantages of the subject matter described herein will become apparent from the following Detailed Description, Figures, and Claims. The invention is defined by the appended claims.

### BRIEF DESCRIPTION OF THE FIGURES

Aspects, features and advantages of embodiments of the present disclosure will become apparent from the following description of embodiments in reference to the appended drawings in which like numerals denote like elements.
Figure 1 is a block system diagram showing embodiment componentry of an aerosol generation system.
Figure 2 is a schematic diagram showing embodiment componentry of aerosol generation apparatus of the system of figure 1.
Figure 3 is a schematic diagram showing an embodiment of the system of figure 1.
Figure 4 is a schematic diagram showing an embodiment of a consumable and device body of the system of figure 1.
Figures 5-6 are flow diagrams showing embodiment processes implemented by the system of figure 1.
Figure 7 is a schematic diagram showing an embodiment of a consumable and device body of the system of figure 1.
Figures 8-10 are flow diagrams showing embodiment processes implemented by the system of figure 1.

### DETAILED DESCRIPTION OF EMBODIMENTS

Before describing several embodiments of aerosol generation system, it is to be understood that the system is not limited to the details of construction or process steps set forth in the following description. It will be apparent to those skilled in the art having the benefit of the present disclosure that the system is capable of other embodiments and of being practiced or being carried out in various ways.

The present disclosure may be better understood in view of the following explanations:
As used herein, the term "**aerosol generation apparatus**" or "**apparatus**" may include smoking apparatus to deliver an aerosol to a user, including an aerosol for smoking, by means of an aerosol generating unit (e.g. a heater or atomiser which generates a vapour which condenses into an aerosol before delivery to an outlet of the apparatus at, for example, a mouthpiece, for inhalation by a user). An aerosol for smoking may refer to an aerosol with particle sizes of 0.5-7 microns. The particle size may be less than 10 or 7 microns. The apparatus may be portable. "Portable" may refer to the apparatus being for use when held by a user. The apparatus may be adapted to generate a variable amount of aerosol, e.g. by activating an atomizer for a variable amount of time (as opposed to a metered dose of aerosol), which can be controlled by a trigger. The trigger may be user activated, such as a vaping button and/or inhalation sensor. The inhalation sensor may be sensitive to the strength of inhalation as well as the duration of inhalation so as to enable more or less vapour to be provided based on the strength of inhalation (so as to mimic the effect of smoking a conventional combustible smoking article such as a cigarette, cigar or pipe, etc.). The apparatus may include a temperature regulation control such as for example a Proportional, Integral, Differential (PID) controller to quickly drive the temperature of the heater and/or the heated aerosol generating substance (aerosol pre-cursor) to a specified target temperature and thereafter to maintain the temperature at the target temperature regardless of the amount of substrate pre-cursor) available at the aerosol generating unit and regardless of the strength with which a user inhales.

As used herein, the term "**aerosol generation system**" or "**system**" may include the apparatus and optionally other circuitry/componentry associated with the function of the apparatus, e.g. a peripheral device and/or other remote computing device.

As used herein, the term "**aerosol**" may include a suspension of precursor as one or more of a: solid particles; liquid droplets; gas. Said suspension may be in a gas including air. Aerosol herein may generally refer to/include a vapour. Aerosol may include one or more components of the precursor.

As used herein, the term "**aerosol-forming precursor**" or "**precursor**" or "**aerosol-forming substance**" or "**substance**" may refer to one or more of a: liquid; solid; gel; other substance. The precursor may be processable by an atomizer of the apparatus to form an aerosol as defined herein. The precursor may comprise one or more of: nicotine; caffeine or other active component. The active component may be carried with a carrier, which may be a liquid. The carrier may include propylene glycol or glycerine. A flavouring may also be present. The flavouring may include Ethylvanillin (vanilla), menthol, Isoamyl acetate (banana oil) or similar.

As used herein, the term "**electrical circuitry**" or "**electric circuitry**" or "**circuitry**" or "**control circuitry**" may refer to, be part of, or include one or more of the following or other suitable hardware or software components: an Application Specific Integrated Circuit (ASIC); electronic/electrical circuit (e.g. passive components, which may include combinations of transistors, transformers, resistors, capacitors); a processor (shared, dedicated, or group); a memory (shared, dedicated, or group), that may execute one or more software or firmware programs; a combinational logic circuit. The electrical circuitry may be centralised on the apparatus or distributed, including distributed on board the apparatus and/or on one or more components in communication with the apparatus, e.g. as part of the system. The component may include one or more of a: networked-based computer (e.g. a remote server); cloud-based computer; peripheral device. The circuitry may be implemented in, or functions associated with the circuitry may be implemented by, one or more software or firmware modules. The circuitry may include logic, at least partially operable in hardware.

As used herein, the term "**processor**" or "**processing resource**" may refer to one or more units for processing including as an ASIC, microcontroller, FPGA, microprocessor, digital signal processor (DSP) capability, state machine or other suitable component. A processor may include a computer program, as machine readable instructions stored on a memory and/or programmable logic. The processor may have various arrangements corresponding to those discussed for the circuitry, e.g. on-board and/or off board the apparatus as part of the system.

As used herein, the term "**computer readable medium/media**" or "**data storage**" may include conventional non-transient memory, for example one or more of: random access memory (RAM); a CD-ROM; a hard drive; a solid state drive; a flash drive; a memory card; a DVD-ROM; a floppy disk; an optical drive. The memory may have various arrangements corresponding to those discussed for the circuitry/processor.

As used herein, the term "**information carrying medium**" may include one or more arrangements for storage of information on any suitable medium. Examples include: data storage as defined herein; a Radio Frequency Identification (RFID) transponder; codes encoding information, such as optical (e.g. a bar code or QR code) or mechanically read codes (e.g. a configuration of the absence or presents of cut-outs to encode a bit, through which pins or a reader may be inserted).

As used herein, the term "**communication resources**" or "**communication interface**" may refer to hardware and/or firmware for electronic information transfer. Wireless communication resources may include hardware to transmit and receive signals by radio and may include various protocol implementations e.g. the 802.11 standard described in the Institute of Electronics Engineers (IEEE) and Bluetooth^{™} from the Bluetooth Special Interest Group of Kirkland Wash. Wired communication resources may include; Universal Serial Bus (USB); High-Definition Multimedia Interface (HDMI) or other protocol implementations. The apparatus may include communication resources for communication with a peripheral device.

As used herein, the term "**network**" or "**computer network**" may refer to a system for electronic information transfer. The network may include one or more networks of any type, which may include: a Public Land Mobile Network (PLMN); a telephone network (e.g. a Public Switched Telephone Network (PSTN) and/or a wireless network); a local area network (LAN); a metropolitan area network (MAN); a wide area network (WAN); an Internet Protocol Multimedia Subsystem (IMS) network; a private network; the Internet; an intranet.

As used herein, the term "**peripheral electronic device**" or "**electronic user device**" or may include electronic components peripheral to apparatus. The peripheral electronic device may comprise electronic computer devices including: a smartphone; a PDA; a video game controller; a tablet; a laptop; or other like device.

As used herein, the term "**storage portion**" may refer to a portion of the apparatus adapted to store the precursor.

As used herein, the term "**delivery system**" may refer to a system operative to deliver, by inhalation, aerosol to a user. The delivery system may include a mouthpiece or an assembly comprising a mouthpiece.

As used herein, the term "flow path" may refer to a path or enclosed passageway through the apparatus, through which the user may inhale for delivery of the aerosol. The flow path may be arranged to receive aerosol.

As used herein, the term "flow" may refer to a flow in the flow path, and may include air, which may be induced into the flow path due to an inhalation through the flow path and/or aerosol.

As used herein, the term "**inhale**" or "**puff**" may refer to a user inhaling (e.g. due to an expansion from their lungs) to create a pressure reduction to induce flow through the flow path.

As used herein, the term "**atomizer**" may refer to a device to form the aerosol from the precursor. The atomizer may include a heating system, ultrasonic or other suitable system.

As used herein, the term "**consumable**" or "**capsule**" or "**pod**" may refer to a unit that includes a storage portion. The consumable may include a heating system, e.g. it is arranged as a cartomizer. The consumable may include information carrying medium.

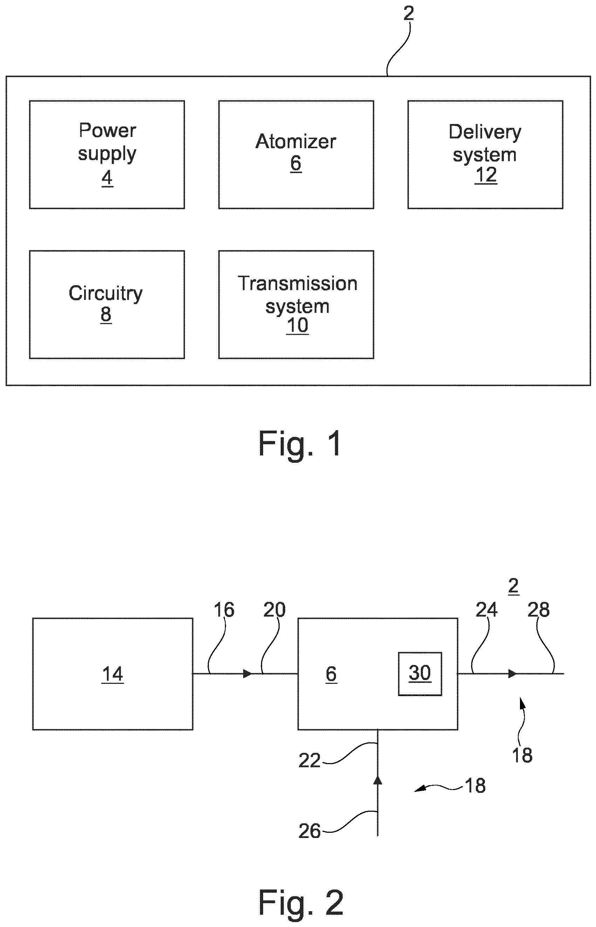

Referring to figure 1, embodiment aerosol generation apparatus **2** includes a power supply **4**, for supply of electrical energy. The electrical energy may be supplied to an atomizer **6** and/or electrical circuitry **8.** The power supply **4** may include an electric power supply in the form of a battery and/or an electrical connection to an external power source. The apparatus **2** may include a precursor transmission system **10** to transmit precursor to the atomizer **6** for formation of aerosol therefrom. A delivery system **12** delivers the aerosol to a user.

Referring to figures 1 and 2, embodiment aerosol generation apparatus **2** includes the precursor transmission system **10** having a storage portion **14** for storage of the precursor. The storage portion **14** may be arranged as a reservoir (not shown) or other suitably arranged portion depending on the physical state of the precursor. The precursor transmission system **10** includes a transmission unit **16** to transmit the precursor from the storage portion **14** to the atomizer **6**. The transmission unit **16** may include one or more of: an absorbent member (e.g. cotton) arranged for transmission by capillary action; a conduit; a valve; a pumping system, which may include an electrically operated pump.

In an embodiment, which is not illustrated, the precursor transmission system **10** may be omitted. In such an embodiment the precursor may be arranged as a consumable pod (e.g. as a solid or gel), wherein an atomizer includes a heated receptacle for the pod.

The delivery system **12** includes a flow path **18** to transmit aerosol from the atomizer **6** to a user. The atomizer **6** includes a precursor inlet **20**. The atomizer **6** includes a flow inlet **22** and an outlet **24** of the flow path **18** for passage of flow through the atomizer **6**. In an embodiment, which is not illustrated, the flow path **18** receives aerosol from the outlet **24** and does not pass through the atomizer **6**.

The flow path **18** includes an inlet **26**, which may be arranged through a housing of the apparatus **2**. The flow path **18** includes an outlet **28** for delivery of the aerosol and inlet flow to the user. The outlet **28** may be arranged as a mouthpiece or other suitable delivery member.

The atomizer **6** includes a heating system **30**, which may be arranged as one or more electrically resistive heating elements (not shown). A heating element may be arranged as a wire or filament. A heating element may be operatively connected to the precursor transmission unit **16** to heat precursor of the transmission unit **16**. The one or more heating elements may be arranged within and/or in fluid communication with the flow path **18**, e.g. to be cooled by said flow.

The heating system may heat the precursor to below 300 or 350 degrees C. In the instance of a solid precursor, the precursor may be heated without combustion.

In an embodiment, a cartomizer integrates a storage portion **14** and transmission unit **16** of the transmission system **10** and heating system **30** in a common housing. The cartomizer includes a predetermined amount of the precursor. In an embodiment, the consumable unit may integrate said cartomizer and a mouthpiece.

The circuitry **8** regulates electrical energy from the power supply **4** to the heating system **30**. Proximal a heating element the precursor may be converted to a supersaturated vapour, which subsequently condenses to form an inhalable aerosol. As precursor is converted to aerosol it is replaced by further precursor supplied by the transmission unit **16**, e.g. by a pumping action, until the storage portion **14** is spent.

The electrical energy supplied to the heating system **30** may be controlled with the circuitry **8** by one of the following or other like circuitry: pulse width modulation (PWM) via an electrically operated switch, or by other suitable means, e.g. by chopping of an alternating current waveform; a direct current (DC): DC converter, such as a Buck converter; a linear regulator.

The circuitry **8** may comprise a trigger (not shown) to detect when aerosol formation is required. The circuity **8** may effect the supply of electrical energy to the heating system **30** upon the determination of triggering of the trigger. The trigger may detect when a user action suggests aerosol formation is required. Such a request may be implicit, such as via inhalation, or explicit, such as via a button press. The trigger may comprise an actuator actuated by physical contact (e.g. a vaping button), including by a digit of a hand of the user. Examples include a button or dial. The trigger may comprise an inhalation sensor operable to detect user inhalation through the flow path **18**. The inhalation sensor may comprise a flow meter or a pressure sensor operable to determine flow pressure, including by capacitive sensing of a pressure respondent displaceable diaphragm.

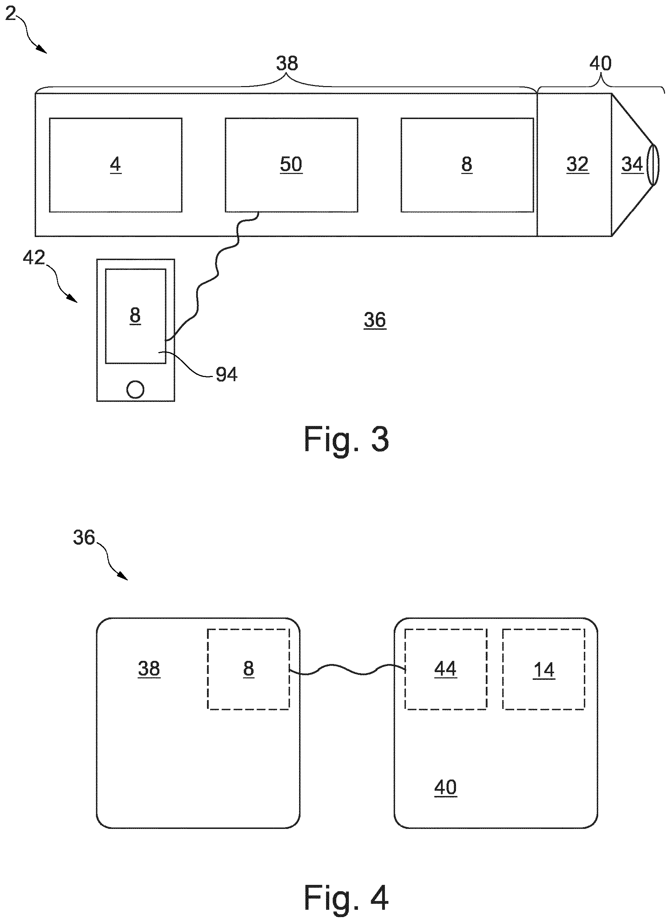

Referring to figure 3 an embodiment arrangement of an electrically operated aerosol generation system **36** for generation of an aerosol may implement features of any of the preceding embodiments or other embodiments disclosed herein. The aerosol generation system **36** comprises the aerosol generation apparatus **2** and one or more peripheral devices **42**. The apparatus **2** is geometrically elongate along a longitudinal axis. The apparatus **2** comprises a device body **38** and a removable consumable **40**.

The device body **38** includes the power supply **4**, circuitry **8** and optional communication interface **50**, which are arranged within a common housing **35**. In variant embodiments: the communication interface **50** may be omitted; one or more of said components may be arranged in the housing. The circuitry **8** is (in addition to being arranged on the device body **38**) distributed at least partially on a peripheral device **48**. In variant embodiments (not shown) it is additionally arranged on a remote server system or isolated on the device body.

The consumable **40** includes the mouth piece **34** and a cartomizer **32**. The cartomizer **32** includes; the atomizer **6**; precursor transmission unit **16**; and storage portion **14**. In variant embodiments: the consumable is separate from the atomizer, i.e. it is not arranged as a cartomizer and may not include the precursor transmission unit.

Referring to figure 4, an electrically operated aerosol generation system **36** for generation of an aerosol may implement features of any of the preceding embodiments or other embodiments disclosed herein.

The aerosol generation system **36** includes a consumable **40** for an aerosol generation device, the consumable comprising a storage portion **14** for storage of aerosol generating precursor **34** and an information carrying medium **44** storing information, wherein the information comprises an encrypted first portion and a corresponding second portion without encryption. The aerosol generation system **36** includes an aerosol generation device body **38** including electrical circuitry **8**. Whilst the circuitry is illustrated as being implemented on the device body, it will be understood that in accordance with other embodiments disclosed herein, the circuitry may be distributed, including on the peripheral device **94** and/or a remote server system (not shown).

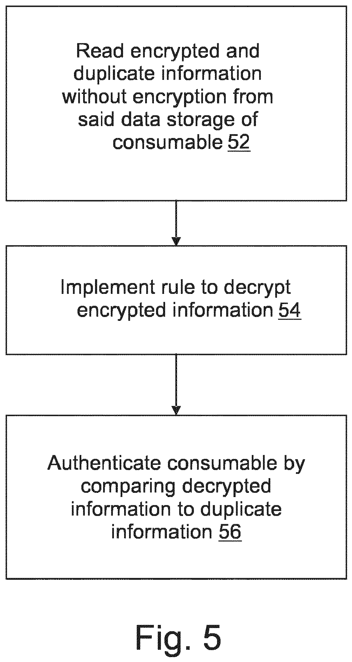

Referring to figure 5, the circuitry **8** is arranged to implement a process of authenticating the consumable **40** to ensure it is suitable for use with the device body **38**. The process includes at block **52** obtaining from said information carrying medium **44** said information. At block **54** the information of the first portion is decrypted. At block **56** the consumable is authenticated by determining a correspondence of least part of the decrypted first portion with the second portion.

Considering said blocks in more detail, at block **52** obtaining from said information carrying medium **44** the information may comprise the circuitry **8** reading the information carrying medium **44**, e.g. all or part. In embodiments, the information carrying medium **44** may be implemented as a readable code (e.g. optical or mechanical). In such embodiments, block **52** may comprise the circuitry **8** controlling a code reader (not shown) to read the code.

In embodiments, the information carrying medium **44** may be implemented as electronic data storage as defined herein. In such embodiments block **52** may comprise the circuitry **8** reading the data storage including by a database query. Reading may be via wired or wireless media, e.g. the data storage is implemented as an (Radio Frequency Identification) RFID transponder, and the circuitry **8** implements an associated reader. It will be understood that various suitable protocols may be implemented to define the rules, syntax etc. for data transfer (which will depend on the implementation or wired or wireless media) including: Bluetooth^{™} from the Bluetooth Special Interest Group of Kirkland Wash; Universal Serial Bus (USB); I²C. Wired media may be preferable since it may be implemented in a more cost-effective manner, and/or data transfer is more secure. Depending on the protocol, reading may include the circuitry **8** synchronising with the memory of the consumable, e.g. via a handshake.

At block **54** the decrypting the first portion may comprise implementing a cryptographic algorithm as defined herein. In an embodiment, the cryptographic algorithm comprises a secret key of the AES (other symmetric encryption algorithm).

At block **56** the determining a correspondence of least part of the decrypted first portion with the second portion may comprise comparing the decrypted first portion to the second portion, including comparing all or part of the decrypted first portion or second portion to the other of the second or first portion. Correspondence can be determined if one or more of the values encoded in the information match, i.e. they are identical.

The information stored at one or more corresponding addresses (wherein an address refers to a specific memory location used by the implemented software/hardware of the circuitry) for the read information may be compared. In an embodiment, only the information stored at two to ten addresses are compared. The authentication process may thereby be implemented with reduced processing and thus power consumption. In an embodiment, the information stored at all the addresses are compared. A consumable may be determined as authenticated if the information stored at all addresses (of those that are compared) correspond to each other (i.e. there is a match in the stored value), or sufficient addresses match (to compensate of potential loss of data integrity).

The information stored by the information carrying medium **44** (e.g. the information that comprises the first and corresponding second portion) may be associated with the operation of the consumable **40** with the system **36**. As used herein "information associated with the operation of the consumable with the system" or "information" may refer to one or more of: a hardware version (e.g. which may provide information of the encoding or data structure of the information for use by the circuitry of the device body); heating system resistance (e.g. for consumables that integrate the heating system); heating system optimal temperature (e.g. selected to correspond to the particular precursor of the consumable); usage level (e.g. for solid or gel precursor) or fill level (e.g. for consumables including a storage portion storing liquid precursor); consumable serial number (e.g. for look-up on a database of other properties related to the consumable or monitoring consumable consumption); manufacturing date; factory of manufacturing; batch number; precursor type (e.g. liquid flavour or if gel, liquid or solid); formulation of precursor (e.g. an amount of a particular active component). In this way when the circuitry **8** decrypts and compares the information, it is also checked for integrity (e.g. sufficient of the addresses match but several do not match). Each piece of the information may be stored at an address of the information carrying medium **44**, with individual bytes for encoding.

The operation of the system **2** may be at least partially based on said information associated with the operation of the consumable as part of the system (e.g. that of the decrypted first portion and/or the second portion). For example, the heating system **30** may be operated at a stored temperature and/or a stored resistance of the heating system **30** may be used to determine the temperature of the heating system (e.g. by relating the resistance to temperature, wherein the electrical current and voltage through the heating system is measured by the circuitry **8**). In this way, the device body **38** can be calibrated by the read information for optimal operation with the consumable **40**.

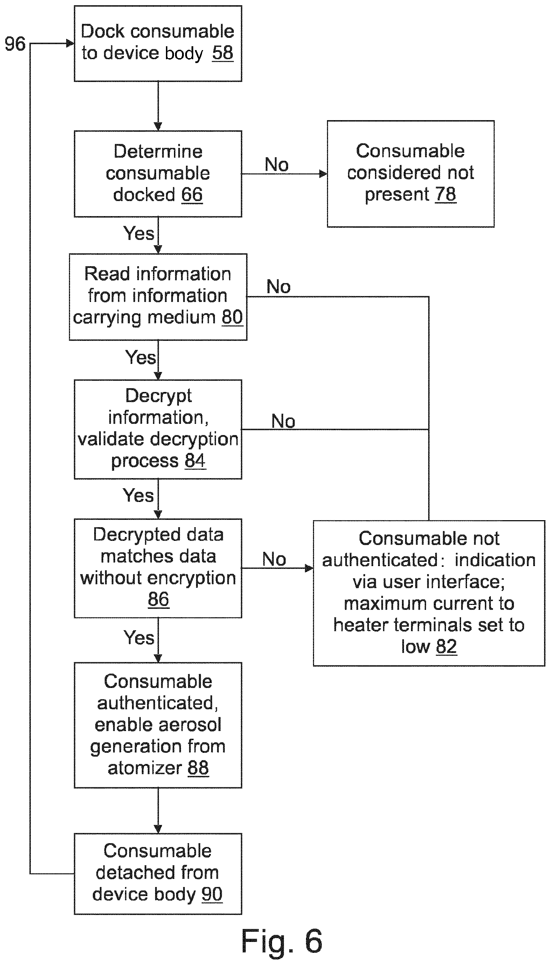

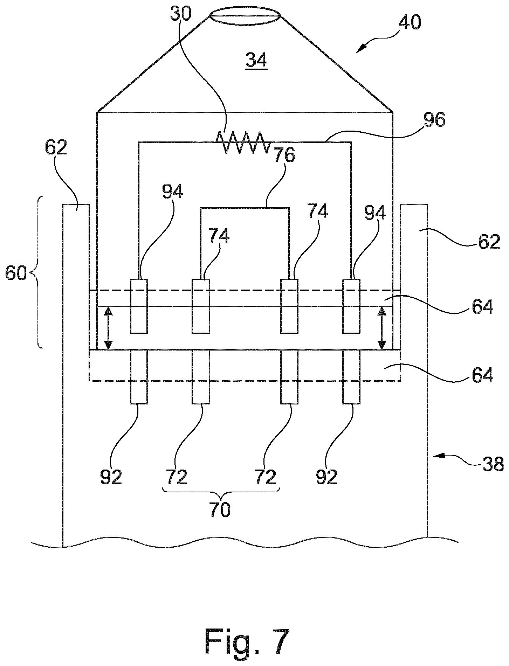

Referring to figure 6, a more detailed implementation of the previous embodiment is provided. At block **58** the consumable **40** is docked with the device body **38**. Referring to figure 7, docking may be implemented via a docking interface **60**. In the embodiment, the docking interface includes interlocking guide members **62** to locate the consumable **40** on the device body **38**. The guide members form a channel and extend outwardly from the device body **38.** The channel corresponds to a peripheral form of the consumable **40**. The docking interface **60** may include a retention system **64** to retain the consumable in the located position. In the embodiment, the retention system **64** includes a magnetic coupling. In other embodiments, other docking interfaces can be implemented, including bayonet, press fit, screw fit.

At block **66** the consumable is determined as docked, which may be implemented by a detection system **70**. In an embodiment, the detection system **70** is implemented by the circuitry **8**. Referring to figure 7, the circuitry **8** includes corresponding device detection terminals **72** arranged on the device body **38** and consumable detection terminals **74** arranged on the consumable **40**. The detection terminals **72**, **74** are electrically coupled when the consumable **40** is docked. Accordingly, a docked consumable **40** can be determined by transmission of electrical energy through a detection circuit **76**, which incorporates the terminals and extends through the consumable **40**. In other embodiments, the detection system may be implemented by other arrangements, including a mechanically or magnetically or optically actuated switch, which is actuated by docking.

In the instance the detection system **70** does not determine a consumable is present, the circuitry **8** considers a consumable not to be docked (regardless of whether an invalid consumable is docked), as indicated by block **78**.

The circuitry **8** may be arranged such that determination of docking automatically triggers authentication of the consumable **40**, e.g. the process described in figure 5 or another embodiment herein. Referring to figure 6, blocks **80-88**, implement a more detailed embodiment of the authentication process described in figure 5.

At block **80** the information from the information carrying medium **44** is read as discussed previously. If the information cannot be read at block **82** the consumable **40** is determined as not authentic. The scenario of a consumable **40** being detected but the information not being read may occur for various reasons, e.g. the information carrying medium is corrupt **44**, or absent (e.g. an invalid consumable comprises consumable detection terminals **74** arranged to trigger detection at block **66** but no information carrying medium).

At block **84** the information is decrypted as discussed previously. Optionally, the decryption process may be validated. In an embodiment including validation, the information of the information carrying medium **44** may include a validation sequence, such as a checksum or parity bit, to check the result of the rule when applied to the encrypted information. If the decryption process cannot be validated at block **82** the consumable **40** is determined as not authentic. The scenario may occur if the information of the information carrying medium **44** is corrupt or not authentic.

At block **86** the decrypted information of the first portion is compared to that of the second portion to determine correspondence as discussed previously. If the decrypted information does not match the corresponding information without encryption, at block **82** the consumable **40** is determined as not authentic.

Referring to block **82**, for determination of a consumable **40** as not authentic, the circuitry **8** may implement various responses. In an embodiment, the heating system **30** of the atomizer **8** is enabled to operate at a predetermined temperature, e.g. a safe temperature such as 20-50% lower than a nominal operating temperature. As an example, the nominal operating temperature may be 250 degrees C and the safe temperature may be 50-200 degrees C. The predetermined operating temperature may be stored on the circuitry **8** of the device body **38**, e.g. via a data storage implemented by the circuitry. The predetermined operating temperature may be selected as the minimum temperature from which an aerosol may be generated from a typical precursor; in this way a consumable that has not been authenticated remains operable in the system. This mode of operation may prevent a consumable with unknown specification operating unsafely. In an embodiment, the heating system **30** of the atomizer **6** is prevented from operation with a consumable **40** that is not authenticated. Such modes of operation may be implemented for consumables with or without an integrated heating system.

For consumables **40** with an integrated heating system **30**, electrical energy may be applied thereto via the circuitry **8**. Referring to figure 7, the circuitry **8** includes corresponding device heater terminals **92** arranged on the device body **38** and consumable heater terminals **94** arranged on the consumable **40**. The heater terminals **92**, **94** are electrically coupled when the consumable **40** docked. Accordingly, a heater system **30** of a docked consumable **40** can be powered by transmission of electrical energy through a heater circuit **96**, which incorporates the terminals, heating system **30** and extends through the consumable **40**.

Referring to figure 7 and block **82** of figure 6, the circuitry **8** may notify a user of a consumable that is not authenticated via a user interface **94**. The user interface **94** may be arranged on one or more of: the device body **38**; the consumable **40**; an electronic peripheral device **42**. The notification may be one or more of: audible; haptic; visual.

Referring to block **88**, in response to the determination of a consumable **40** as authentic, the electrical circuitry **8** may enable operation of a heating system **30** of the atomizer **6** with the precursor of an authenticated consumable, e.g. such that an aerosol is generated from the precursor. The heating system **30** may be operated at a temperature encoded by the information of the information carrying medium **44** and/or in another manner discussed herein.

In embodiments, the circuitry **8** may notify a user of a consumable that is authenticated via a user interface **94** as discussed previously.

Referring to block **90**, in each instance a consumable **40** is removed from the docked position, the circuitry **8** may determine, via the detection system **70**, said removal. Determination of said removal may trigger the circuitry **8** to reset to the state of block **66**, as indicated by loop **96**. Triggering of the authentication process each time the consumable **40** is removed may be beneficial since a user may attempt to quickly remove and replace an authenticated consumable with one that cannot be authenticated.

In an embodiment, the circuitry **8** implements electronic data storage (not shown), wherein said data storage includes a plurality of different cryptographic algorithms as defined herein. The information of the information carrying medium **44** of the consumable **40** (e.g. the first and second portion or other readable information) comprises an identifier to identify one of said cryptographic algorithms for decryption of the first portion of the particular consumable **40**. The identifier may be alphanumeric or with other suitable formulation.

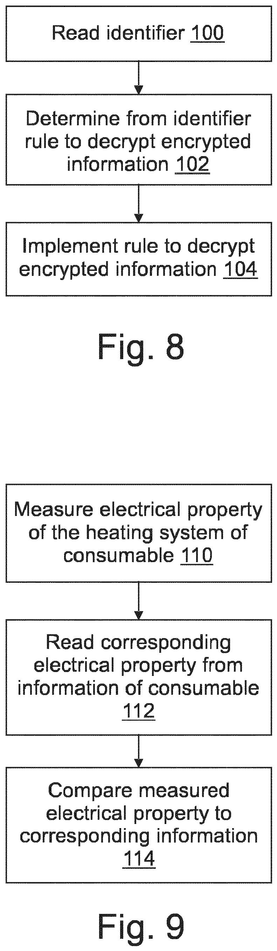

Accordingly, referring to figure 8, the embodiment steps of decrypting the first portion as disclosed herein may further include, at block **100**, reading said identifier from the information carrying medium **44.** At block **102** the identifier is used to determine the particular cryptographic algorithm for decrypting the encrypted first portion. This block may comprise implementing a data structure such as a key value database (or other like paradigm), wherein the identifier is the key and is linked to a single cryptographic algorithm. In embodiments, the data structure may be implemented across other components of the system, including the peripheral device **42**.

In embodiments wherein the identifier is not attributed to a cryptographic algorithm of the data structure, the circuitry **8** may trigger retrieval of a suitable cryptographic algorithm from a data storage of a remote resource, such as a server system, and subsequent update of the data structure. Retrieval may be implemented over the communication interface **50** of the device body **38** and/or peripheral device **42**. In other embodiments, the data structure is regularly updated at predetermined time periods. In an embodiment, the cryptographic algorithm is a secret key of a symmetric encryption algorithm, such as AES.

At block **104**, the selected cryptographic algorithm is implemented to decrypt the encrypted first portion of the information as discussed previously.

Referring to figure 9, alternative or additional authentication processes may be implemented for consumables **40** that include an integrated heating system. At block **110**, the circuitry **8** implements measurement of an electrical property of the heating system **30**. The electrical property may include one or more of: electrical resistance; capacitance; inductance. In the example of electrical resistance, the circuitry **8** may apply a known electrical current through the heater circuit **96** and measure the change in electrical potential over the heating system **30**. In the example of inductance or capacitance, the circuitry **8** may apply a non-steady current or voltage through the heater circuit **96** and determine a subsequent change in phase.

At block **112** the measured electrical property is compared to corresponding information stored on the information carrying medium **44** of the consumable **40**. The information can be stored on the previously described first and second portions or another portion of the information carrying medium **44** and can be read as discussed previously.

The measured electrical property (including value representative thereof, e.g. the actual value with a particular rule or function applied thereto) is stored as said information. The value is obtained from a prior measurement process, which may be performed during assembly of the consumable or in a laboratory prior to shipment to a retailer etc.

The stored measured electrical property is compared to the electrical property measured by the circuitry **8**. If the values therefor correspond, including an exact match or within a particular threshold (such as less than ±5% or ±10%) the consumable **40** may be determined as authentic (or partially authentic when this authentication process is combined with other embodiment authentication processed discussed herein). In an embodiment, the electrical resistance is stored in Ohms and is compared to the corresponding value measured by the circuitry **8**.

In variants of the preceding embodiment process, the stored measured electrical property may be encrypted, with decryption by a cryptographic algorithm of the circuitry **8**. Accordingly, block **114** may include a step of decrypting the stored measured electrical property prior to said comparison.

With such a process, a counterfeit consumable is complex to manufacture since an electrical property of the heating system **30** is linked to the information stored on the information carrying medium **44**. Therefore, a counterfeit consumable **40** is less likely to be determined as authentic if only the information carrying medium **44** is replicated. Such an arrangement results in a safer system wherein only consumables with known heating systems are implemented.

The embodiment processes described in association with figure 9 may be suitably combined with those described in association with figures 4-8. For example, a consumable may be determined as authentic if 1) the stored measured electrical property corresponds to the electrical property measured by the circuitry and 2) and/or if at least part of the information of the decrypted first portion corresponds to the second portion.

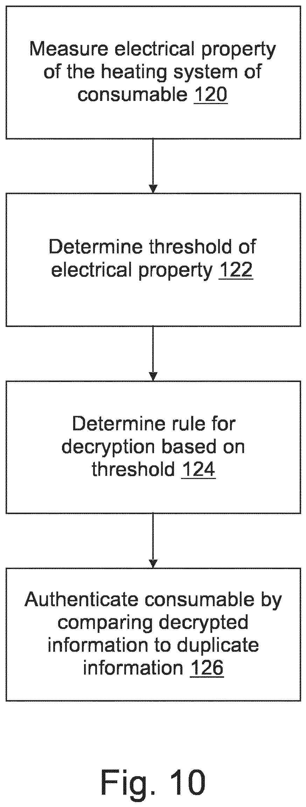

Referring to figure 10, alternative or additional authentication processes may be implemented for consumables **40** that include an integrated heating system **30**. At block **120**, an electrical property of the heating system is measured (as discussed previously).

At block **122** the measured property is determined as being within a particular threshold. In an embodiment, there are a plurality of discrete thresholds, which when taken together cover a continuous range, wherein the measured property corresponds to a single threshold. E.g., in the example of electrical resistance there may be thresholds A-C, wherein A is 100-200 Ohms, B is 201-300 Ohms, C is 301-400 Ohms.

At block **124** a cryptographic algorithm is determined based on the assigned threshold to the measured electrical property. This block may comprise implementing a data structure such as a key value database (or other like paradigm), wherein the assigned threshold (e.g. A-C) is the key and is linked to a single cryptographic algorithm. In embodiments, the data structure may be implemented across other components of the system, including the peripheral device **42**.

At block **126** the consumable is authenticated by comparing decrypted information (which has been decrypted using the determined cryptographic algorithm from block **124**) to duplicate information. This process can be performed as discussed in associated with block **56** of the preceding embodiments.

With such a process, a counterfeit consumable is complex to manufacture since an electrical property of the heating system **30** is linked to the information stored on the information carrying medium **44**. Therefore, a counterfeit consumable **40** is less likely to be determined as authentic of only the information carrying medium **44** is replicated. Such an arrangement results in a safer system wherein only consumables with known heating systems are implemented.

It will be appreciated that any of the disclosed methods (or corresponding apparatuses, programs, data carriers, etc.) may be carried out by either a host or client, depending on the specific implementation (i.e. the disclosed methods/apparatuses are a form of communication(s), and as such, may be carried out from either 'point of view', i.e. in corresponding to each other fashion). Furthermore, it will be understood that the terms "receiving" and "transmitting" encompass "inputting" and "outputting" and are not limited to an RF context of transmitting and receiving radio waves. Therefore, for example, a chip or other device or component for realizing embodiments could generate data for output to another chip, device or component, or have as an input data from another chip, device or component, and such an output or input could be referred to as "transmit" and "receive" including gerund forms, that is, "transmitting" and "receiving", as well as such "transmitting" and "receiving" within an RF context.

As used in this specification, any formulation used of the style "at least one of A, B or C", and the formulation "at least one of A, B and C" use a disjunctive "or" and a disjunctive "and" such that those formulations comprise any and all joint and several permutations of A, B, C, that is, A alone, B alone, C alone, A and B in any order, A and C in any order, B and C in any order and A, B, C in any order. There may be more or less than three features used in such formulations.

In the claims, any reference signs placed between parentheses shall not be construed as limiting the claim. The word 'comprising' does not exclude the presence of other elements or steps then those listed in a claim. Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

Unless otherwise explicitly stated as incompatible, or the physics or otherwise of the embodiments, example or claims prevent such a combination, the features of the foregoing embodiments and examples, and of the following claims may be integrated together in any suitable arrangement, especially ones where there is a beneficial effect in doing so. This is not limited to only any specified benefit, and instead may arise from an "ex post facto" benefit. This is to say that the combination of features is not limited by the described forms, particularly the form (e.g. numbering) of the example(s), embodiment(s), or dependency of the claim(s). Moreover, this also applies to the phrase "in one embodiment", "according to an embodiment" and the like, which are merely a stylistic form of wording and are not to be construed as limiting the following features to a separate embodiment to all other instances of the same or similar wording. This is to say, a reference to 'an', 'one' or 'some' embodiment(s) may be a reference to any one or more, and/or all embodiments, or combination(s) thereof, disclosed. Also, similarly, the reference to "the" embodiment may not be limited to the immediately preceding embodiment.

As used herein, any machine executable instructions, or compute readable media, may carry out a disclosed method, and may therefore be used synonymously with the term method, or each other.

The foregoing description of one or more implementations provides illustration and description, but is not intended to be exhaustive or to limit the scope of the invention to the precise form disclosed. Modifications and variations are possible in light of the above teachings or may be acquired from practice of various implementations of the present disclosure. The invention is defined by the appended claims.

### LIST OF REFERENCES

**36** System
   **2** Apparatus
   **38** Device Body
   **4** Power supply
   **8** Circuitry
   **6** Atomizer
      **20** Precursor inlet
      **22** Flow inlet
      **24** Outlet
      **30** Heating system
      **10** Precursor transmission system
      **16** Transmission unit
      **12** Delivery system
         **34** Mouthpiece
      **18** Flow path
         **26** Inlet
         **28** Outlet
      **32** Cartomizer
      **35** Housing
      **50** Communication interface
**40** Consumable
   **14** Storage portion
   **34** Precursor
   **44** Information carrying medium
**60** Docking system
   **62** Guide members
   **64** Retention system
   **70** Detection system
   **72** Device detection terminals
   **74** Consumable detection terminals
   **76** Detection circuit
   **96** heater circuit
   **92** device power terminals
   **94** consumable power terminals
**42** Peripheral device
**94** User interface
**8** Circuitry

## Claims

1. An aerosol generation system (36) comprising:
a consumable (40) comprising a storage portion (14) for storage of an aerosol generating precursor and a non-transient memory carrying information (44), wherein the information comprises an encrypted first portion and a corresponding second portion without encryption; and
an aerosol generation device body (38) including electrical circuitry (8) to: obtain from said non-transient memory (44) said information; decrypt the first portion; determine the consumable (40) as authentic if the decrypted first portion corresponds to the second portion,
wherein all or part of the encrypted first portion and/or of the corresponding second portion without encryption of the information is associated with the operation of the consumable (40) as part of the system (36), and is for authentication and for calibration of the device body (38) for use with the consumable (40).

2. The system of claim 1, wherein all or part of the information that is associated with the operation of the consumable, which is encoded on the consumable, and that is for authentication and for calibration of the device body (38) for use with the consumable (40), is encrypted as the first portion.

3. The system of any preceding claim, wherein the electrical circuitry (8) to enable operation of a heating system (30) of an atomizer (6) with the precursor of an authenticated consumable (40), wherein the operation is at least partially based on the information, and/or
wherein if a consumable is determined as not authentic, the electrical circuitry (8) to prevent operation of a heating system (30) of an atomizer (6) with the precursor of the consumable (40) or to enable usage of said heating system (30) with said precursor at a predetermined safe operating temperature.

4. The system of any preceding claim, wherein the consumable (40) and device body (38) comprise a docking interface (60) for docking of the consumable (40) with the aerosol generation device body (38), the electrical circuitry (8) including a detection circuit to determine said docking and to trigger authentication of the consumable (40).

5. The system of any preceding claim, wherein the electrical circuitry (8) implements electronic data storage, the data storage to store a plurality of cryptographic algorithms, the information of the non-transient memory (44) of the consumable (40) comprising an identifier to identify one of said cryptographic algorithms for decryption of the first portion, the electrical circuitry (8) to identify a cryptographic algorithm for decryption of the first portion based on the identifier and to decrypt the first portion with the identified a cryptographic algorithm.

6. The system of any of the preceding, wherein the aerosol generation device body (38) includes a communication interface (50) to receive a cryptographic algorithm or information to generate a cryptographic algorithm, the data storage of said device body (38) to store said algorithm.

7. The system of any preceding claim, wherein the consumable (40) includes a heating system (30) having one or more electrically resistive heating elements, the information of the non-transient memory (44) of the consumable, preferably the encrypted first portion and the corresponding second portion without encryption, including information based on an electrical property of the heating system (30), wherein the electrical circuitry (8) to: measure the electrical property of the heating system (30) by the application of electrical energy therethrough; determine the consumable (40) as authentic only if the measured electrical property corresponds to the information based on the electrical property.

8. The system of any preceding claim, wherein the electrical circuitry (8) implements electronic data storage, the data storage to store a plurality of cryptographic algorithms, wherein the consumable includes a heating system (30) having one or more electrically resistive heating elements,
the electrical circuitry (8) to: measure an electrical property of the heating system (30) by the application of electrical energy therethrough; select a cryptographic algorithm to decrypt the first portion based on the measured electrical property; decrypt the first portion with the selected cryptographic algorithm.

9. A consumable (40) for the aerosol generation system (36) according to any of the preceding claims, the consumable (40) comprising a storage portion (14) for storage of an aerosol generating precursor and a non-transient memory carrying information (44), wherein the information of the non-transient memory (44) comprises an encrypted first portion and a corresponding second portion without encryption,
the consumable (40) to transfer the first portion and the second portion to an aerosol generation device body (38) so that the device body (38) can authenticate the consumable (40) by determining a correspondence of the decrypted first portion to the second portion,
wherein all or part of the encrypted first portion and/or of the corresponding second portion without encryption of the information is associated with the operation of the consumable (40), as part of the system, and is for authentication and for calibration of the device body (38) for use with the consumable (40).

10. Use of the consumable (40) of claim 9 for the aerosol generation system (36) of any of claims 1 to 8 for authenticating the consumable (40).

11. A method of authenticating a consumable (40), the consumable (40) including a storage portion (14) for storage of an aerosol generating precursor, the method comprising:
reading information from a non-transient memory (44) of the consumable (40), the information comprising an encrypted first portion and a corresponding second portion without encryption; and
determining the consumable (40) as authentic if the decrypted first portion corresponds to the second portion,
wherein all or part of the encrypted first portion and/or of the corresponding second portion without encryption of the information is associated with the operation of the consumable (40), as part of the system (36), and is for authentication and for calibration of the device body (38) for use with the consumable (40).

12. The method according to claim 11, wherein all or part of the information that is associated with the operation of the consumable, which is encoded on the consumable, and that is for authentication and for calibration of the device body (38) for use with the consumable (40), is encrypted as the first portion.

13. A computer program comprising instructions which when executed on programmable electric circuity execute the method of claim 11 or 12.

14. Electric circuitry for an electrically operated aerosol generation system, said circuitry to implement the method of claim 11 or 12.

15. A non-transitory computer readable medium comprising the computer program of claim 13.

## Patentansprüche

1. Aerosolerzeugungssystem (36), umfassend:
ein Verbrauchsartikel (40), umfassend einen Speicherabschnitt (14) zum Speichern eines aerosolerzeugenden Vorläufers und einen nichtflüchtigen Speicher, der Informationen (44) trägt, wobei die Informationen einen verschlüsselten ersten Bereich und einen entsprechenden zweiten Bereich ohne Verschlüsselung umfassen; und
einen Aerosolerzeugungsvorrichtungskörper (38), der eine elektrische Schaltung (8) umfasst, um: von dem nichtflüchtigen Speicher (44) die Informationen zu erhalten; den ersten Bereich zu entschlüsseln; den Verbrauchsartikel (40) als authentisch zu bestimmen, wenn der entschlüsselte erste Bereich dem zweiten Bereich entspricht, wobei der gesamte oder ein Teil des verschlüsselten ersten Bereichs und/oder des entsprechenden zweiten Bereichs ohne Verschlüsselung der Informationen mit dem Betrieb des Verbrauchsartikels (40) als Teil des Systems (36) assoziiert ist und zur Authentifizierung und zur Kalibrierung des Vorrichtungskörpers (38) zur Verwendung mit dem Verbrauchsartikel (40) dient.

2. System nach Anspruch 1, wobei alle oder ein Teil der Informationen, die mit dem Betrieb des Verbrauchsartikels assoziiert sind, die auf dem Verbrauchsartikel codiert sind und die zur Authentifizierung und zur Kalibrierung des Vorrichtungskörpers (38) zur Verwendung mit dem Verbrauchsartikel (40) dienen, als der erste Bereich verschlüsselt sind.

3. System nach einem der vorhergehenden Ansprüche, wobei die elektrischen Schaltungen (8) den Betrieb eines Heizsystems (30) eines Zerstäubers (6) mit dem Vorläufer eines authentifizierten Verbrauchsartikels (40) ermöglichen, wobei der Betrieb zumindest teilweise auf den Informationen basiert, und/oder wobei, wenn ein Verbrauchsartikel als nicht authentisch bestimmt wird, die elektrischen Schaltungen (8) den Betrieb eines Heizsystems (30) eines Zerstäubers (6) mit dem Vorläufer des Verbrauchsartikels (40) verhindern oder die Verwendung des Heizsystems (30) mit dem Vorläufer bei einer vorbestimmten sicheren Betriebstemperatur ermöglichen.

4. System nach einem der vorhergehenden Ansprüche, wobei der Verbrauchsartikel (40) und der Vorrichtungskörper (38) eine Andockschnittstelle (60) zum Andocken des Verbrauchsartikels (40) an den Aerosolerzeugungsvorrichtungskörper (38) umfassen, wobei die elektrischen Schaltungen (8) eine Detektionsschaltung umfassen, um das Andocken zu bestimmen und die Authentifizierung des Verbrauchsartikels (40) auszulösen.

5. System nach einem der vorhergehenden Ansprüche, wobei die elektrischen Schaltungen (8) einen elektronischen Datenspeicher implementieren, wobei der Datenspeicher mehrere kryptographische Algorithmen speichern soll, wobei die Informationen des nichtflüchtigen Speichers (44) des Verbrauchsartikels (40) eine Kennung umfassen, um einen der kryptographischen Algorithmen zur Entschlüsselung des ersten Bereichs zu identifizieren, wobei die elektrischen Schaltungen (8) einen kryptographischen Algorithmus zur Entschlüsselung des ersten Bereichs basierend auf der Kennung identifizieren und den ersten Bereich mit dem identifizierten kryptographischen Algorithmus entschlüsseln sollen.

6. System nach einem der vorhergehenden Ansprüche, wobei der Aerosolerzeugungsvorrichtungskörper (38) eine Kommunikationsschnittstelle (50) umfasst, um einen kryptographischen Algorithmus oder Informationen zum Erzeugen eines kryptographischen Algorithmus zu empfangen, wobei der Datenspeicher des Vorrichtungskörpers (38) den Algorithmus speichern soll.

7. System nach einem der vorhergehenden Ansprüche, wobei der Verbrauchsartikel (40) ein Heizsystem (30) mit einem oder mehreren elektrisch resistiven Heizelementen umfasst, wobei die Informationen des nichtflüchtigen Speichers (44) des Verbrauchsartikels, vorzugsweise des verschlüsselten ersten Bereichs und des entsprechenden zweiten Bereichs ohne Verschlüsselung, Informationen basierend auf einer elektrischen Eigenschaft des Heizsystems (30) umfassen, wobei die elektrischen Schaltungen (8): die elektrische Eigenschaft des Heizsystems (30) durch die Anwendung von elektrischer Energie dort hindurch messen; den Verbrauchsartikel (40) nur dann als authentisch bestimmen, wenn die gemessene elektrische Eigenschaft den Informationen basierend auf der elektrischen Eigenschaft entspricht.

8. System nach einem der vorhergehenden Ansprüche, wobei die elektrischen Schaltungen (8) einen elektronischen Datenspeicher implementieren, wobei der Datenspeicher mehrere kryptographische Algorithmen speichern soll, wobei der Verbrauchsartikel ein Heizsystem (30) mit einem oder mehreren elektrisch resistiven Heizelementen umfasst,
wobei die elektrischen Schaltungen (8) eingerichtet sind zum: Messen einer elektrischen Eigenschaft des Heizsystems (30) durch die Anwendung von elektrischer Energie dort hindurch; Auswählen eines kryptographischen Algorithmus, um den ersten Bereich basierend auf der gemessenen elektrischen Eigenschaft zu entschlüsseln; Entschlüsseln des ersten Bereichs mit dem ausgewählten kryptographischen Algorithmus.

9. Verbrauchsartikel (40) für das Aerosolerzeugungssystem (36) nach einem der vorhergehenden Ansprüche, wobei der Verbrauchsartikel (40) einen Speicherabschnitt (14) zum Speichern eines aerosolerzeugenden Vorläufers und einen nichtflüchtigen Speicher, der Informationen (44) trägt, umfasst, wobei die Informationen des nichtflüchtigen Speichers (44) einen verschlüsselten ersten Bereich und einen entsprechenden zweiten Bereich ohne Verschlüsselung umfassen,
wobei der Verbrauchsartikel (40) den ersten Bereich und den zweiten Bereich an einen Aerosolerzeugungsvorrichtungskörper (38) übertragen soll, so dass der Vorrichtungskörper (38) den Verbrauchsartikel (40) authentifizieren kann, indem er eine Entsprechung des entschlüsselten ersten Bereichs mit dem zweiten Bereich bestimmt,
wobei der gesamte oder ein Teil des verschlüsselten ersten Bereichs und/oder des entsprechenden zweiten Bereichs ohne Verschlüsselung der Informationen mit dem Betrieb des Verbrauchsartikels (40) als Teil des Systems assoziiert ist und zur Authentifizierung und zur Kalibrierung des Vorrichtungskörpers (38) zur Verwendung mit dem Verbrauchsartikel (40) dient.

10. Verwendung des Verbrauchsartikels (40) nach Anspruch 9 für das Aerosolerzeugungssystem (36) nach einem der Ansprüche 1 bis 8 zum Authentifizieren des Verbrauchsartikels (40).

11. Verfahren zum Authentifizieren eines Verbrauchsartikels (40), wobei der Verbrauchsartikel (40) einen Speicherabschnitt (14) zum Speichern eines aerosolerzeugenden Vorläufers umfasst, wobei das Verfahren umfasst:
Lesen von Informationen aus einem nichtflüchtigen Speicher (44) des Verbrauchsartikels (40), wobei die Informationen einen verschlüsselten ersten Bereich und einen entsprechenden zweiten Bereich ohne Verschlüsselung umfassen; und
Bestimmen des Verbrauchsartikels (40) als authentisch, wenn der entschlüsselte erste Bereich dem zweiten Bereich entspricht,
wobei der gesamte oder ein Teil des verschlüsselten ersten Bereichs und/oder des entsprechenden zweiten Bereichs ohne Verschlüsselung der Informationen mit dem Betrieb des Verbrauchsartikels (40) als Teil des Systems (36) assoziiert ist und zur Authentifizierung und zur Kalibrierung des Vorrichtungskörpers (38) zur Verwendung mit dem Verbrauchsartikel (40) dient.

12. Verfahren nach Anspruch 11, wobei alle oder ein Teil der Informationen, die mit dem Betrieb des Verbrauchsartikels assoziiert sind, die auf dem Verbrauchsartikel codiert sind und die zur Authentifizierung und zur Kalibrierung des Vorrichtungskörpers (38) zur Verwendung mit dem Verbrauchsartikel (40) dienen, als der erste Bereich verschlüsselt sind.

13. Computerprogramm, umfassend Anweisungen, die, wenn sie auf programmierbaren elektrischen Schaltungen ausgeführt werden, das Verfahren nach Anspruch 11 oder 12 ausführen.

14. Elektrische Schaltungen für ein elektrisch betriebenes Aerosolerzeugungssystem, wobei die Schaltungen das Verfahren nach Anspruch 11 oder 12 implementieren sollen.

15. Nichtflüchtiges computerlesbares Medium, umfassend das Computerprogramm nach Anspruch 13.

## Revendications

1. Un système de génération d'aérosol (36) comprenant :
un consommable (40) comprenant une partie de stockage (14) pour le stockage d'un précurseur de génération d'aérosol, et une mémoire non transitoire portant une information (44), l'information comprenant une première partie chiffrée et une seconde partie correspondante sans chiffrement ; et
un corps de dispositif de génération d'aérosol (38), comprenant une circuiterie électrique (8) servant à :
obtenir ladite information depuis ladite mémoire non transitoire (44) ; déchiffrer la première partie ; déterminer que le consommable (40) est authentique si la première partie déchiffrée correspond à la seconde partie,
dans lequel tout ou partie de la première partie chiffrée et/ou de la seconde partie correspondante sans chiffrement de l'information est associé à la mise en œuvre du consommable (40) en tant que partie du système (36), et sert à l'authentification et à la calibration du corps de dispositif (38) pour son utilisation avec le consommable (40).

2. Le système de la revendication 1, dans lequel tout ou partie de l'information qui est associée à la mise en œuvre du consommable, qui est codée sur le consommable, et qui sert à l'authentification et à la calibration du corps de dispositif (38) pour être utilisée avec le consommable (40), est chiffré en tant que ladite première partie.

3. Le système de l'une des revendications précédentes, dans lequel la circuiterie électrique sert à activer la mise en œuvre d'un système chauffant (30) d'un atomiseur (6) avec le précurseur d'un consommable authentifié (40), la mise en œuvre étant au moins partiellement basée sur l'information, et/ou dans lequel, s'il est déterminé qu'un consommable n'est pas authentique, la circuiterie électrique (8) sert à empêcher la mise en œuvre d'un système chauffant (30) d'un atomiseur (6) avec le précurseur du consommable (40) ou à permettre l'usage dudit système chauffant (30) avec ledit précurseur à une température de mise en œuvre sûre prédéterminée.

4. Le système de l'une des revendications précédentes, dans lequel le consommable (40) et le corps de dispositif (38) comprennent une interface d'emboîtement (60) pour emboîter le consommable (40) sur le corps de dispositif de génération d'aérosol (38), la circuiterie électrique (8) comprenant un circuit de détection servant à déterminer ledit emboîtement et à déclencher l'authentification du consommable (40).

5. Le système de l'une des revendications précédentes, dans lequel la circuiterie électrique (8) implémente un stockage électronique de données, le stockage de données servant à stocker une pluralité d'algorithmes cryptographiques, l'information de la mémoire non transitoire (44) du consommable (40) comprenant un identifiant pour identifier l'un desdits algorithmes cryptographiques pour le déchiffrement de la première partie, la circuiterie électrique (8) servant à identifier un algorithme cryptographique pour le déchiffrement de la première partie sur la base de l'identifiant, et à déchiffrer la première partie avec l'algorithme cryptographique identifié.

6. Le système de l'une des revendications précédentes, dans lequel le corps de dispositif de génération d'aérosol (38) comprend une interface de communication (50) servant à recevoir un algorithme cryptographique ou une information pour générer un algorithme cryptographique, le stockage de données dudit corps de dispositif (38) servant à stocker ledit algorithme.

7. Le système de l'une des revendications précédentes, dans lequel le consommable (40) comprend un système chauffant (30) possédant un ou plusieurs éléments chauffants électriquement résistifs, l'information de la mémoire non transitoire (44) du consommable, de préférence la première partie chiffrée et la seconde partie correspondante sans chiffrement, comprenant une information basée sur une propriété électrique du système chauffant (30),
dans lequel la circuiterie électrique (8) sert à : mesurer la propriété électrique du système chauffant (30) par l'application d'une énergie électrique au travers ; déterminer que le consommable (40) est authentique seulement si la propriété électrique mesurée correspond à l'information basée sur la propriété électrique.

8. Le système de l'une des revendications précédentes, dans lequel la circuiterie électrique implémente un stockage électronique de données, le stockage de données servant à stocker une pluralité d'algorithmes cryptographiques, le consommable comprenant un système chauffant (30) possédant un ou plusieurs éléments chauffants électriquement résistifs,
la circuiterie électrique (8) sert à : mesurer une propriété électrique du système chauffant (30) par l'application d'une énergie électrique au travers ; sélectionner un algorithme cryptographique pour déchiffrer la première partie sur la base de la propriété électrique mesurée ; déchiffrer la première partie avec l'algorithme cryptographique sélectionnée.

9. Un consommable (40) pour le système de génération d'aérosol (36) selon l'une des revendications précédentes, dans lequel le consommable (40) comprend une partie de stockage (14) pour le stockage d'un précurseur de génération d'aérosol, et une mémoire non transitoire portant une information (44), l'information de la mémoire non transitoire (44) comprenant une première partie chiffrée et une seconde partie correspondante sans chiffrement,
le consommable (40) permet de transférer la première partie et la seconde partie vers un corps de dispositif de génération d'aérosol (38) de sorte que le corps de dispositif (38) puisse authentifier le consommable (40) par détermination d'une correspondance de la première partie déchiffrée avec la seconde partie,
dans lequel tout ou partie de la première partie chiffrée et/ou de la seconde partie correspondante sans chiffrement de l'information est associé à la mise en œuvre du consommable, en tant que partie du système, et sert à l'authentification et à la calibration du corps de dispositif (38) pour son utilisation avec le consommable (40) .

10. Utilisation du consommable (40) de la revendication 9 pour le système de génération d'aérosol (36) de l'une des revendications 1 à 8 pour l'authentification du consommable (40).

11. Un procédé d'authentification d'un consommable (40), le consommable (40) comprenant une partie de stockage (14) pour le stockage d'un précurseur de génération d'aérosol, le procédé comprenant :
la lecture d'une information depuis une mémoire non transitoire (44) du consommable (40), l'information comprenant une première partie chiffrée et une seconde partie correspondante sans chiffrement ; et
la détermination que le consommable (40) est authentique si la première partie déchiffrée correspond à la seconde partie,
dans lequel tout ou partie de la première partie chiffrée et/ou de la seconde partie correspondante sans chiffrement de l'information est associé à la mise en œuvre du consommable (40), en tant que partie du système (36), et sert à l'authentification et à la calibration du corps de dispositif (38) pour sa mise en œuvre avec le consommable (40).

12. Le procédé selon la revendication 11, dans lequel tout ou partie de l'information qui est associée à la mise en œuvre du consommable, qui est codée sur le consommable, et qui sert à l'authentification et à la calibration du corps de dispositif (38) pour son utilisation avec le consommable (40), est chiffré en tant que ladite première partie.

13. Un programme informatique comprenant des instructions qui, lorsqu'elles sont exécutées sur une circuiterie électrique programmable, exécutent le procédé de la revendication 11 ou 12.

14. Circuiterie électrique pour un système de génération d'aérosol mis en œuvre électriquement, ladite circuiterie servant à implémenter le procédé de la revendication 11 ou 12.

15. Un support non transitoire lisible par calculateur comprenant le programme informatique de la revendication 13.
